Europäisches Patentamt

European Patent Office

Office européen des brevets

(19)

(11) **EP 1 146 376 A1**

(12) **EUROPEAN PATENT APPLICATION**

(43) Date of publication:
**17.10.2001 Bulletin 2001/42**

(51) Int Cl.7: **G02B 21/00**

(21) Application number: **00810319.4**

(22) Date of filing: **12.04.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **Triple-O Microscopy GmbH**
**14469 Potsdam (DE)**

(72) Inventors:
• **Pohl, Dieter W.**
**8134 Adliswil (CH)**
• **Bouhelier, Alexandre**
**4056 Basel (CH)**

(74) Representative: **Barth, Carl Otto, Dipl.-Ing.**
**Barth & Partner**
**Zürichstrasse 34**
**8134 Adliswil/Zürich (CH)**

(54) **Method and apparatus for the controlled conditioning of scanning probes**

(57)     The present invention concerns the fabrication, reshaping, and repair of scanning probes (SPs), which are the most essential part of any scanning probe microscope (SPM). This is effected by controlled, possibly multi-stage chemical reactions between an SP surface and a reactive medium, which reactions, by appropriate selection and matching of chemicals to the material to be treated at the SP, and by appropriate control of the contact area and, eventually, of the electrical environment, results in deposition, removal, or modification of material at well-defined regions on the surface of the SP, in particular at the very tip of the SP, e.g. as desired for aperture SPs (ASPs) used in scanning near field optical microscopes (SNOMs). The chemical reactions may preferably be electrolytic ones and/or performed while the SP is mounted in the SPM. The latter even enables repair of a damaged SP in situ.

Fig. 3

EP 1 146 376 A1

## Description

*Technical Field*

The present invention is directed towards the fabrication, repair, or reshaping of scanning probes (SPs), which are the most essential part of any scanning probe microscope (SPM). More specifically, the invention relates to a variety of methods based on controlled chemical reactions between an SP and a reactive medium that result in deposition, removal, or modification of material at a well-defined region on the surface of the SP and that may be performed while the SP is mounted in the SPM.

Though the examples shown are directed primarily towards fabrication, reshaping and repair of SPs used for aperture scanning near-field optical microscopy (SNOM), the invention may be used for fabrication, reshaping and repair of SPs used in any type of SPM, and also for any similar structures outside the field of SPM.

*Background and Prior Art*

Scanning probe microscopes (SPMs) are well-established powerful tools of local surface characterization and modification. The basic element of an SPM is the scannable probe tip (SP). Typically, structures with size in between 0.1 nm and 1000 nm are addressed. Moreover, small bodies such as individual molecules or basic biological entities can be manipulated by the SP.

Originally, SPs were made from a single material only. The only requirements then were a sharp apex and, eventually, cleanliness of the surface. The usefulness of an embedded cleaning process of a STM probe was demonstrated by Nishioka and Yasue, as described in EP 0 736 746, entitled "Method of using scanning probe microscopy permitting cleaning of probe microscope or of probe tip in ambient atmosphere".

With increasing sophistication of scanning probe applications, the need for more complex SPs came up. This was recognized first in the development of SNOM. Here the SP preferentially consists of a transparent core, e.g. glass or the like, covered with an opaque metal coating. A tiny aperture at the very apex is the active element as described by D.W. Pohl in US patent 4 604 520, entitled "Optical Near Field Scanning Microscope", by M. Islam in US patent 5 664 036, "High resolution fiber optic for near-field optical microscopy and method of making them", and by A. Lewis et al in US patent 4 917 462, "Near-field scanning optical microscopy". Light transmitted through the aperture interacts selectively with objects in its immediate vicinity. The detectable radiation from the SP/object region provides highly local information suitable for the generation of pixels for high resolution scan images. Such an SP shall be called "aperture SP", or ASP, in the following.

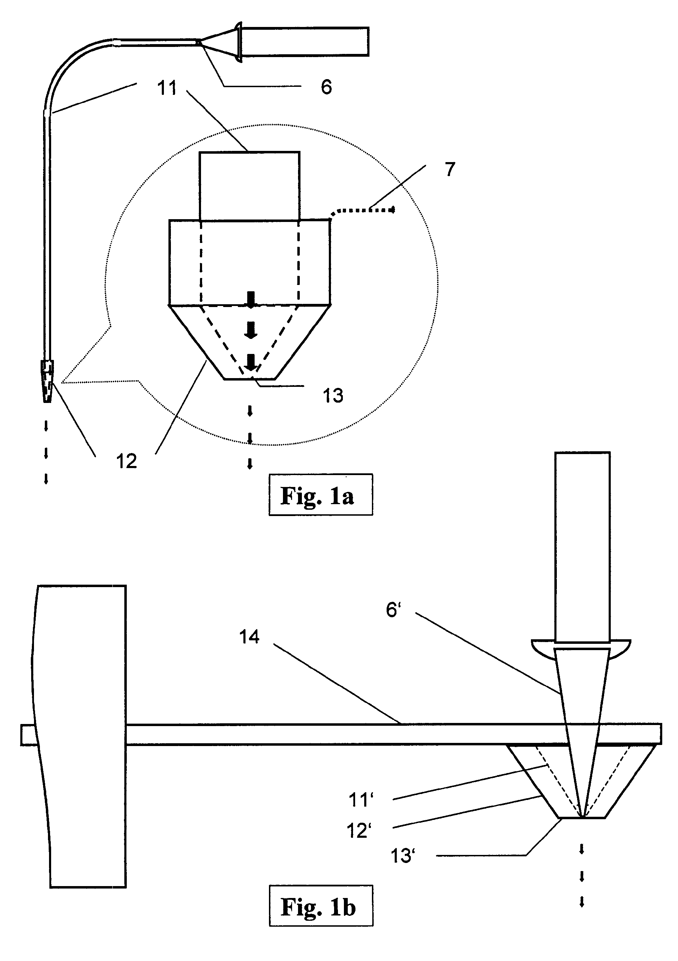

Preferred embodiments of the ASP typically consist essentially of a cylinder of transparent material, most commonly an optical fiber with a conical tip at one end, or a microcantilever with attached pyramidal tip. These embodiments are sketched in Fig.1a and 1b, described further down in detail, wherein the inset shows an enlarged tip with coating and aperture. Fabrication, reshaping and repair of such ASPs are a major application of this invention.

In addition to ASPs, a variety of other composite tip shapes became of interest for SPM in recent years. These include designs alternative to apertures for SNOM applications. An example is described in EP 0 308 537 B1 by U. Duerig, U. Ch. Fischer and D.W. Pohl, entitled "Sensor for converting a distance to optical and further to electrical energy, and surface sensing apparatus doing the same". Another example, here for atomic force microscopes, so-called AFMs, is described by K. Quate in US patent 5 354 985, "Near-field scanning optical and force microscope including cantilever and optical waveguide". Tips coated at their apex with certain materials, for instance, allow for selective chemical interactions, in particular with biological molecules, as described for instance by E.-L. Florin, V.T. Moy and H.E. Gaub in "Adhesive forces between individual ligand-receptor pairs", Science (1994), Vol. 264, pp. 415-417. Further, the use of optically active material was disclosed by R. Kopelman, T. Weihong, and S. Zhong-you in US patent 5 627 922, "Micro optical fiber light source and sensor and method of fabrication thereof". Metallic tips isolated by a dielectric material except for the very apex, used for STM studies in fluid environments were described, for instance, by H. Siegenthaler, E. Ammann, P.-F. Indermühle, and G. Repphun in a paper entitled "Nanoscale Probes of the Solid-Liquid Interface" in "Nanoscale Science and Technology" (N. Garcia, M. Nieto-Vesperinas, H. Rohrer, Eds.), NATO ASI Series E, Vol. 348, pp. 297-315, Kluwer Academic Publishers, Dordrecht, 1998.

The dimensions of the structured region at the apex of the SP typically are in the sub-100 nm range. The techniques available for manufacturing SPs with such specifications are not yet satisfactory for different reasons. This is particularly relevant for SNOM applications which depend critically on the availability of well-shaped ASPs. So far, the required apertures have been produced by either of the following processes:

- "first cover then remove": coating the tip completely with an opaque coating and then removing the coating selectively from the apex, or

- "shadow evaporation": depositing opaque material in such a way that a sufficiently small area at the apex is left uncovered.

The first method was used by D.W. Pohl, W. Denk, and M. Lanz in their pioneering work "Optical stethoscopy: Image recording with resolution λ/20" in Appl. Phys. Lett. **44**, pp. 651-653, 1984, where they demonstrated the super-resolution capability of SNOM for the first time. The authors pressed the fully coated tip against an object surface until the quartz core of the ASP broke through the metal coating. The resultant apertures were very small but extremely short-lived.

The second method, introduced by E. Betzig, S.G. Grubb, R.J. Chichester, D.J. DiGiovanni and J.S. Weiner in their paper "Fiber Laser Probe for Near-Field Scanning Optical Microscopy", published in Appl. Phys. Lett. **63**, pp. 3550, 1993, therefore was mainly used in the past because of its simplicity and better tip stability. It is based on metal evaporation at a angle tilt with respect to the axis of the ASP. Within the radius of curvature of the tip's apex, an area is in the "shadow" of the beam of metal vapor and remains free from metal deposition. The apertures obtained by this process typically have diameters of 50-150 nm. However, the rim of the aperture consists of metal grains 30-50 nm in diameter which results in an irregular shape on this scale and poor reproducibility. These ASPs were sufficient for exploratory studies, but turned out to be of little use for routine work. Moreover, the size of these apertures is too large in general for high resolution microscopy.

Attention therefore was focused on the first method again in recent time. Good results were obtained by removing metal from the tip apex with the help of a focused ion beam (FIB) microscope as described in the publication of J.A. Veerman, A.M. Otter, L. Kuipers, and N.F. Van Hulst, "High definition aperture probes for scanning near field optical microscopy fabricated by focused ion beam milling" in Appl. Phy. Lett. **72**, pp. 3115-3117, 1998.

Another approach to remove material from a metal coating is electrochemical erosion. The principal possibility of structuring an SP by this technique was mentioned in general terms by M. Fujihira, T. Ataka, and T. Sakuhara in their European patent application 921166681.5, entitled "High resolution observation apparatus with photon scanning tunneling microscope". The authors, however, neither discuss the essential problem on how to restrict the erosion process to the small area of the aperture nor do they offer a solution how to do it. A way to tackle this problem was proposed by D. Mulin, D. Courjon, J. P.

Malugani, and B. Gauthier-Manuel in their paper "Use of solid electrolytic erosion for generating nano-aperture near-field collectors", published in Appl. Phys. Lett. **71**, pp. 437-439, 1997. The authors removed a silver film of 90 nm thickness from the tip apex by using a solid electrolyte for electrochemical erosion. The electrolyte used was $AgPO_3$-AgI. An aperture was obtained, but the diameter of about 150 nm was far too large to be employed in a high resolution SNOM. Moreover, the core was protruding from the coating which is unfavorable since the rim of the aperture cannot be placed sufficiently close to the sample surface to achieve high resolution.

In spite of the failure, the solid-solid electrolytic reaction bears potential for controlled removal of material from an SP because the contact area between ASP and solid electrolyte can be kept small on a nanometric scale. A variety of solid electrolytes is known in the literature, cf. for example the book "Solid Electrolytes", edited by P. Hagenmueller and W. van Gool (Academic Press New York 1978). Many solid electrolytes react preferentially with silver, among them $AgPO_3$-AgI as described in the article of J. P. Malugani, A. Wasniewski, M. Doreau, and G. Robert in "Conductivite ionique dans les verres $AgPO_3$-AgX", Mat. Res. Bull, **13**, pp. 427-433, 1978. Silver has favorable optical and electrical properties. A further potentially useful property of silver is its pronounced plasmon resonance. The advantages of an SP excited to a plasmon resonance are described in US patent 5 789 742 by P. Wolff, "Near-field scanning optical microscope probe exhibiting resonant plasmon excitation". Still another useful property of silver is its reaction with sulfur containing thiols which allows to bind self-assembled monolayers of organic molecules to a silver surface as described for instance by E.-L. Florin, V.T. Moy and H.E. Gaub in "Adhesive forces between individual ligand-receptor pairs", Science (1994), Vol. 264 , pp. 415-417.

When repeating the experiment of Mulin et al. and looking at its unacceptable results, it was believed that the unfavorable size and shape of the aperture resulted from lack of control of the electrolytic process. This latter belief became the starting point for the present invention, as explained further down.

In the following, the deficiencies in the state of the art solutions shall be summarized:

1. SPs to be used used in SNOMs and other SPM are fabricated <u>ex situ,</u> i.e. outside the respective SPM. Being fragile and susceptible to chemical attack (aging), storage and transport of such SPs requires great care. Quite often an SP tip gets damaged before or while being mounted in the probe head of the SPM.

2. A related problem is SP damage during operation. For instance, the aperture diameter of the ASP frequently increases during scan imaging because metal (or other) grains are broken off during accidental collisions with the sample. At present, there is no repair mechanism available and an SP has to be replaced in such a situation. This implies interruption of scan imaging for an extended time and difficulties to find the imaged sample area again. The only exception are SPs used in scanning tunnelling microscopes, STMs, which eventually can be reshaped by generating a high voltage spark between SP and sample, but this process is specific and only applicable for STMs.

3. Focused ion beam (FIB) microscopes are too expensive to be used as dedicated instruments for SP fabrication. The possibilities to monitor and control the formation of an aperture or another desired structure in a general purpose FIB are limited, leaving the result, for instance the aperture size, to the skill and good luck of the operator.

4. ASPs produced by the shadow evaporation method are poorly reproducible. The aperture frequently is too large and/or too irregular for high resolution work.

5. The method proposed by Mulin et al. is too little controlled ??? and the probe produced by this method is not suited for high resolution SNOM. As a result, the choice of SP shapes is limited and difficult to modify. Routine work with SNOM is severely jeopardized by lack of high quality ASPs, their limited lifetime, and lack of repair possibilities for ASPs.

*The Invention*

Starting from the experiment of Mulin et al. with its unacceptable results, the experimental setup was complemented by sensitive control mechanisms for the electrolytic current and the detection of the transmitted light. It turned out that these additional controls enable the reproducible production of very small apertures well suited for SNOM studies. The size of the apertures in fact is adjustable by means of a control electronic which breaks the electrolytic contact as soon as a predetermined intensity of transmitted light is reached. The novel approach finally led to the present invention which may be summarized as follows:

a.) The SP Conditioning Apparatus and Methods

This aspect of the present invention relates to an SP conditioning apparatus and to a number of methods that allow to do the final steps of SP fabrication or to reshape or to repair an SP. In the following, this will be called 'conditioning'. The term 'reshaping' is used hereinbelow to mean that the shape and/or material of the active part of an SP is modified such that the SP attains a different functionality.

Essentially, the methods are based on the utilization of chemical reactions between the SP and at least one condensed reactive medium. They are directed specifically, though not exclusively (this refers to apex region), to deposition, modification or removal of material at the apex region of the SP. 'Condensed' means that the medium either is a fluid or a solid. 'Apex region' means the highly curved front part of the SP tip and its environment whose size is roughly defined by the lateral resolution to be achieved in SPM scan imaging process. The reactive media are chosen to react with the SP at the area of contact only, and to do this in a controllable way. An important type of reactions are electrolytic reactions the progress of which can be controlled precisely by the electrolytic current driving the reaction. The progress of the reactions must result in the variation of at least one readily measurable parameter.

The SP conditioning apparatus comprises at least one probe head, one conditioning stage, one conditioning monitor and one conditioning controller. The SPs to be conditioned and the reactive media are mounted in the probe head and in the conditioning stage, respectively. They are mounted in such a way that they can be brought in contact with each other by means of at least one positioner. 'Positioner' here is a means that allows to translate, rotate or tilt a stage or a part of it in a controllable way. The positioner may be activated manually, but frequently activation in correspondence to an electrical signal is required. This is achieved by electro-mechanic positioners such as motor-driven micrometer screws, loudspeaker coils, and/or piezo-electric elements. The positioners are integrated into the probe head and/or in the conditioning stage. They allow adjustment of the contact area on the surfaces of both the SP and the reactive medium with regard to position and size. The positioners also allow to change size and position of the contact area during conditioning.

The conditioning monitor serves to convert the value of a readily detectable parameter into an electrical signal. This signal serves as input to the conditioning controller. The output of the latter drives selected positioners such that the distance between the SP and a reactive medium can be varied in accordance with the signal. The variation in distance changes the contact area due to deformation and thereby influences the progress of the reaction. The progress may be accelerated, kept constant, or stopped in this way. The controller may optionally adjust the lateral position of the SP with respect to the reactive medium or or adjust any other additional parameter that influences the progress of the reaction. The progress of material deposition or removal is controllable with nanometer-scale precision in the envisaged practical applications by the appropriate combination of monitor, controller and positioners. In general, the conditioning controller comprises a microprocessor or a complete computer.

b.) The 'Conditioner SPM'

The second important aspect of the present invention concerns a 'conditioner SPM' which is a combination of the SP conditioning apparatus sketched above with an SPM of standard functionality. The building blocks of the SPM are a mechanical arrangement, comprising at least an probe head, a sample stage and a detector stage, and a control unit. The design of such an SPM is known to a person skilled in the art of scanning probe microscopy.

The SP conditioning apparatus and the standard SPM are combined in such a way that the conditioner SPM can be operated in either an imaging mode or a conditioning mode. The conditioner SPM can be switched between these different modes of operation without unmounting the SP. This is achieved by employing the same probe head for imaging <u>and</u> for conditioning, and using positioners that allow to translate or shift the SP between two positions, the position occupied in the imaging and the position occupied in the conditioning mode.

Alternatively, sample and conditioning stages may be translated or shifted and the probe head kept fixed. Optionally, conditioning and sample stages may be integrated into one stage, reactive media and sample occupying different zones of the stage. The same positioners may then be used to approach the SP either to the sample or to the reactive medium; also the positioners used for lateral positioning and scanning can be the same in both modes.

An example of a conditioner SPM is described further below.

The great advantage of the invention is that the shape of an SP may be changed in a controlled way and with nanometer-scale precision. Though this should be already obvious to the person skilled in the art, it will become even better understood from the following description of embodiments of the invention.

The methods according to the invention, in order to allow deposition or removal of opaque material at the apex of an SP by chemical means and with high precision, require embodiments with one or more reactive media as main parts. These reactive media may be integrated into an SPM in such a way that the fabrication of an SP can be finished with the SP mounted in operating position in the SPM. An SP further can be reshaped or repaired while mounted in the SPM. An important application of the invention is the preparation of apertures in ASPs as well as the reshaping and repair of such apertures in situ.

As a specific example, an embodiment will be described which is integrated into a SNOM, henceforth called 'conditioner SNOM', and allows to finish the fabrication of a fiber ASP, viz. to open a small aperture at the apex, while the SP is mounted in operating position. This embodiment also allows for reshaping and repair of the SP without unmounting. These features are favorable for SNOM imaging in comparison to the established procedures since

- the risk of SP damage before usage is reduced,
- the size of the aperture can be taylored to the specific needs of the imaging process,
- the size of the aperture can be changed within an ongoing SNOM investigation,
- the SP can be repaired <u>in situ</u> in case of damage during an ongoing SNOM investigation and imaging can be resumed immediately after repair.

The advantages of the invention are numerous when looking at the arrangements and methods described and considering the appended claims.

One embodiment described and claimed features the advantage that the area of contact between an SP and a reactive medium can be precisely chosen and that the progress of a reaction between the SP and the reactive medium can be precisely controlled. Even further, the invention has the advantage that the shape of the contact area can be varied in the course of a conditioning process which allows for the generation of SP shapes more complex than before.

A "conditioner SPM" as defined according to the invention has the advantage that an SP can be finished in the conditioning mode right before being used in the imaging mode. This reduces the risk of SP damage during storage or mounting procedure. Switching between modes further allows reshaping of the SP in the course of a SPM investigation. This provides a capability to modify the functionality of a SP between images and to obtain images from the same sample area that highlight different properties. (So far the sample has to be mounted in another SPM for this purpose which makes it difficult to find the same image area again). The switching capability further allows to repair, i.e. restore the functionality of the SP, without need of unmounting. This allows to resume SPM imaging immediately after the repair process and at the same area as before.

A further advantage is that material can be deposited on or removed from the SP at the contact area or that material of the SP next to the contact area is modified in a controllable way. It is possible to combine several steps of such modifications in a favorable way. This allows to give a semi-finished SP its final shape or to reshape an SP or to repair a damaged SP. In all three cases, the functionality of the SP is changed in a favorable way.

A still further advantage is that the progress of the reaction, in particular of material deposition, removal, or modification may be accelerated, kept constant, or stopped when a critical value of the characteristic parameter and optional other input parameters is reached. The progress of material deposition or removal is controllable with nanometer-scale precision by appropriate combination of monitor, controller and positioners.

In particular, the progress of the processes can be monitored and controlled precisely by measuring and controlling, respectively, the electrolytic current if the reaction between SP and reactive medium is an electrolytic one. The electrolytic current further can be used to control the distance of the SP with respect to the surface of the electrolyte. This has the advantage that the rate of metal removal or deposition can be adjusted to have a favorable value and that extreme variations can be avoided. This in turn has the advantage that the structure of the reshaped SP surface does not change in an erratic way.

A still further advantage is that the contact area between the SP and the solid reactive medium is well defined, in contrast to a contact between an SP and a liquid electrolyte since the latter may creep along the SP surface due to wetting forces. In particular, the contact area can be made arbitrarily small. There is a large variety of solid-solid reactions potentially useful for SP conditioning, the reactions mentioned in the claims representing a small subset only.

Further advantages result from the possibility to use $AgPO_3$-AgI glass which provides high ionic conductivity for silver ions and is highly transparent to light. It is hence particularly suited for the electrolytic removal of silver from an SP. Silver has the advantage of high optical reflectivity, strong surface plasmon resonance, high electric conductivity, and binding capability for monolayers of organic molecules with thiol groups. Such monolayers are widely used in modern analytic organic chemistry and biology.

A further advantage results from the use of alkali hydroxides, in particular NOH, which spontaneously react with aluminum and other metals. The reaction product is water-soluble $Na[Al(OH)_4]$. This results in removal of such metals from a SP at the contact area. The progress of the reaction can be controlled optically since NaOH is transparent.

Further, iodine reacts spontaneously with aluminum according to

$$Al + 3 I \rightarrow Al\, I_3$$

which is water-soluble. This results in removal of a metal coating in the contact area. Aluminum is a particularly advantageous opaque material for ASP because of its high light reflectivity.

A still further advantage results from the fact that the delicate aperture formation process in the fabrication of an ASP can be performed while the SP is mounted in the conditioner SNOM which lowers the risk of damage and that the process of aperture formation by removal of metal can be controlled precisely. This is achieved by detection of light transmitted through the apex. The high sensitivity of optical detectors allows to stop the removal of opaque material at a very low light level, corresponding to a very small aperture size. Usage of the light signal as input of a control circuit allows program automatic retraction of the SP when the predetermined level of transmitted light intensity is reached. Specifically, apertures with a diameter < 50 nm can be generated in this way, which are of great interest for advanced applications.

ASPs are delicate probes that frequently have to be replaced because the aperture gets deformed due to collision of the SP with the sample surface during scan imaging. Thus, a repair capability can greatly improve the lifetime of a ASP. Usage of two different electrolytes for repair or reshaping has the advantage that one electrolyte may have favorable properties for metal deposition, the other for removal. Liquid or liquid-like (gels, etc.) electrolytes are particularly suited for homogeneous deposition while solid electrolytes are favorable for metal removal from well-defined contact areas.

*Description of Various Embodiments and the Drawings*

More examples of embodiments illustrating the methods of the invention are depicted in the drawings and described in detail below. These examples refer to the formation of apertures for ASPs and their repair, but the principles disclosed may be used for the conditioning of other types of SPs as well.

The appended drawings show in

| | |
|---|---|
| Figs. 1a and 1b | two preferred types of APSs, |
| Fig. 2 | the five basic parts of a conditioner SNOM, |
| Fig. 3 | a conditioner SNOM with two integrated electrolytes, |
| Fig. 4 | the conditioner SNOM of Fig. 3 with a sample |
| Figs. 5a to 5d | the different steps of aperture formation, |
| Fig. 6a | a record of $I_1$, $V_1$ and $\Phi$ during aperture formation |
| Fig. 6b | end views (electron microscope images) of a series of ASPs whose apertures were formed by the process of Fig.5, and |
| Figs. 7a to 7f | the different steps of aperture repair. |

The figures do not show the correct dimensions for the sake of clarity, nor are the relations between the dimensions in a realistic scale.

Out of the variety of opportunities for SP conditioning provided by the present invention, an exemplaric embodiment and some methods are described hereinafter. The example refers to a SNOM, describing the formation of apertures at the apex of an ASP and its repair. Again, the dimensions shown are exaggerated for the sake of clarity.

Figs.1a and 1b show two typical implementations of aperture SPs, short ASPs. Both consist of a transparent core 11 and an opaque coating 12. The active part is a tiny aperture 13 at the apex of a sharp tip in both implementations. The core 11 is an optical fiber in Fig.1a and a hollow or solid pyramidal tip in Fig.1b, attached to a flexible microfabricated cantilever 14 of the kind used in scanning force microscopy, often referred to as "atomic force microscopy" or AFM. The opaque coating material typically is a highly reflective metal such as aluminum or silver, having a typical thickness of 100- 300 nm. The manufacturing processes of such SPs - except for the precise and reproducible formation of the tiny aperture - is known and state of the art. Light to be transmitted through the aperture is coupled into the base of the tip through the fiber 11 in Fig. 1a, or focused directly onto the wide base of the pyramid as shown in Fig.1b, respectively.

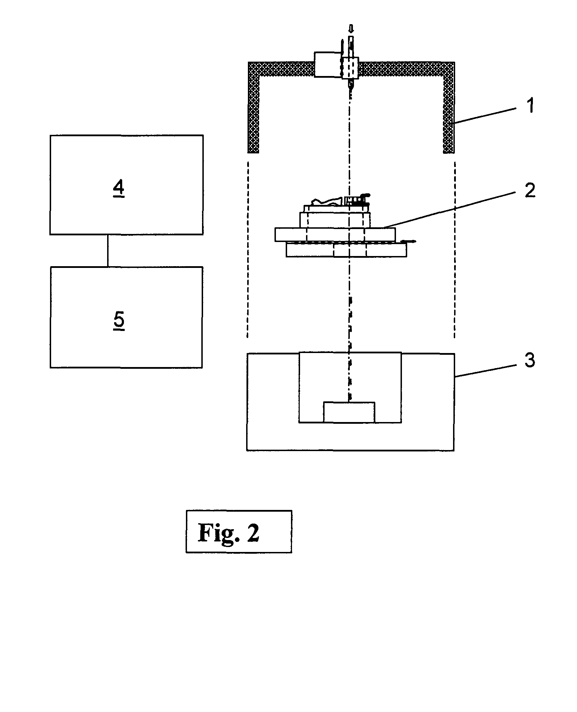

Figs. 2 to 4 show schematically a conditioner SNOM integrating the parts of a SNOM with standard functionality with those of an SP conditioner.

Fig.2 highlights the basic parts of the conditioner SNOM. The instrument consists of an opto-mechanic (OM) part and an electronic (CCE) part which is computer-controlled in general. The OM part comprises three main units, viz. a probe head 1, a sample stage 2, and a detection unit 3. The CCE part comprises an electronic control unit 4 and a computer 5. Control unit 4 may include several sub-units which determine the mode of operation (imaging or conditioning), and measure and regulate the relevant parameters during operation. These units are not described in detail since their design is obvious to a person skilled in electronics and knowledgeable about the functions to be performed by the conditioner SNOM. Further, the connections between the CCE part 4 and 5 and the OM part 1 to 3 are omitted for the sake of clarity. However, the CCE unit is needed for operation in the SP conditioning mode and for switching between the modes and thus an integral part of the invention.

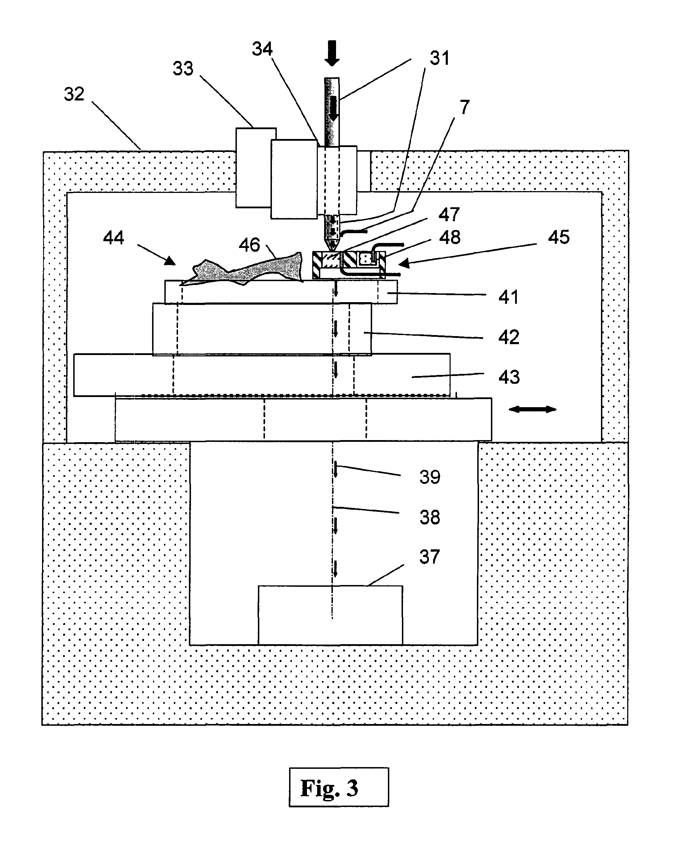

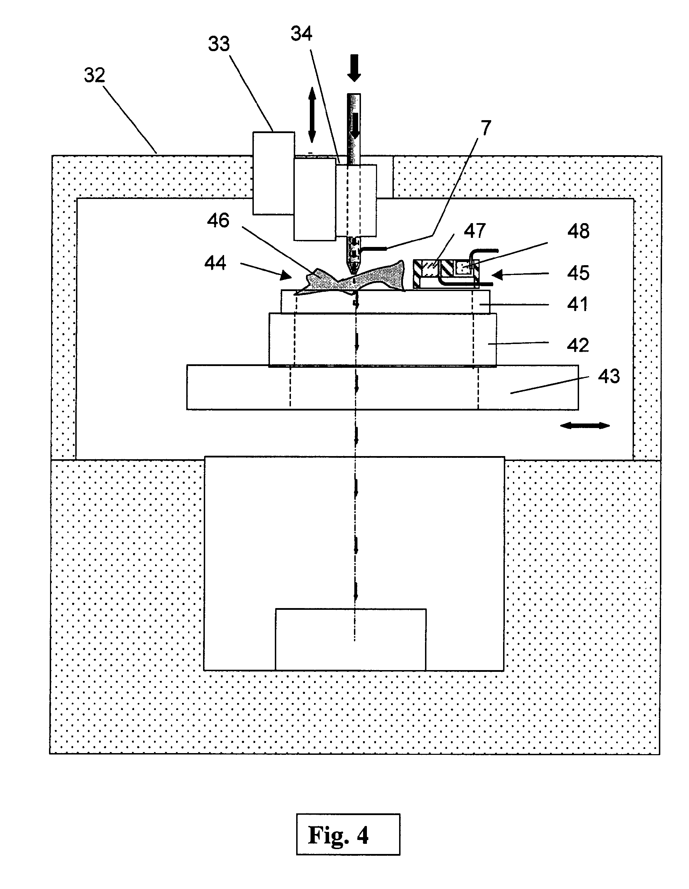

The opto-mechanic (OM) part is shown to greater detail in Figs. 3 and 4. Probe head 1 carries SP 31, consisting of an optical fiber with a pointed end and silver coating (11, 11', 12, 12' in Figs. 1a,b, respectively). The probe head consists of a base 32, a motor-driven long range mechanical positioner 33 and a piezo-electric probe positioner 34. Positioners 33 and 34 control the approach of the SP 31 to the sample stage. The voltages applied to positioners 33 and 34 are controlled by the CCE. Light from a HeNe laser propagates through the fiber of the SP 31 to its apex.

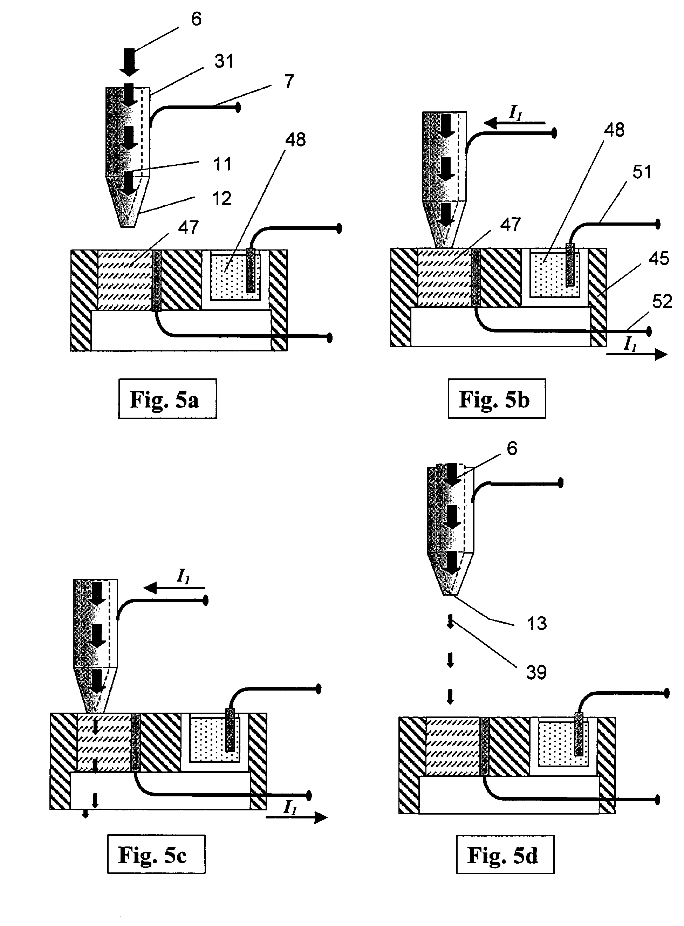

The stage (2 in Fig. 2) combines sample and conditioning stages. It consists of a sample/conditioning table 41 mounted on a two-axis piezo-electric scanner 42 which in turn is mounted on a two-axis motor-controlled mechanic positioner 43. Scanner 42 and positioner 43 operate in lateral directions. Table 41 is divided into a sample zone 44 and a conditioning zone 45. Sample zone 44 occupies the main part of the sample stage and is reserved for mounting a sample 46 to be investigated. The conditioning zone 45, located near the rim of table 41, houses a first and a second electrolytic cell 47 and 48, resp. Cell 47 contains a solid electrolyte, whereas cell 48 houses a liquid one. In the example given, the liquid electrolyte in cell 48 serves to cover the SP 31 with an opaque coating of material, here metal, whereas the solid electrolyte allows for aperture formation by metal removal. In this example, the two electrolytes are $AgPO_3$-AgI glass in the shape of a small pellet 47 and an aqueous $AgNO_3$ solution in a small container 48, respectively. Each electrolyte is connected to the CCE by at least one electrode (51 and 52 in Fig. 5). The positioning range of positioner 43 is sufficient to place either sample 46 or one of the cells 47, 48 under the SP 31.

The detection unit (3 in Fig. 2) under the stage is an inverted conventional optical microscope, a "COM", equipped with a photodetector 37 at one of the viewing ports. Photodetector 37 includes a photomultiplier and imaging optics. The COM may also provide the mounting base for the other units of the OM part and defines the optical axis 38 of the conditioner SNOM. The SP is preferably centered with respect to this optical axis 38.

Fig. 3 depicts a situation where the conditioner SNOM is in the SP conditioning mode and the preparation of SP 31 has just been completed. This is indicated by the weak transmitted light beam 39. The light beam generates an electric signal at detection unit 37 which is connected with the CCE. SP 31 which now is an 'ASP' is still in contact with the solid electrolyte 47, but will be withdrawn in the next moment.

A control program for the conditioning mode adjusts the distance between SP 31 and the electrolyte such that the electrolytic current remains constant during removal of the metal, until the intensity $\Phi$ of the transmitted light beam 39 reaches a predetermined threshold value. At that moment, the controller switches to retraction which interrupts the electrolytic reaction instantaneously. The control electronics is summarily shown in Fig. 2, but not in Fig. 3.

Fig. 4 shows the conditioner SNOM in the imaging mode. To change the mode of operation, the SP 31 was retracted, then table 41 was translated or shifted to the right until the part of sample 46 to be investigated was under the SP 31, better ASP 31, and the latter was lowered again. This procedure can be performed automatically with the help of the CCE, shown as units 4 and 5 in Fig. 2. The transmitted light beam 39 now is used to generate the signal for the SNOM image.

Figs. 5a to 5d show the different steps of aperture formation during the ASP finishing process in greater detail, displaying the conditioning zone 45 with the electrolytic cells 47 and 48 with their respective electrodes 51 and 52, and the ASP 31 with its core 11, opaque coating 12, aperture 13, and its electrode 7.

Fig. 5a depicts the semi-finished ASP 31 approaching solid electrolyte 47. In Fig. 5b, part of the opaque coating 12 has been removed from the apex. The electrolytic process causing the removal of silver, here the opaque material, from the ASP is driven by current $I_1$, as indicated in Fig. 5b.

Fig. 5c shows the ASP at the moment of beginning light transmission, just before withdrawal from the electrolyte 47. Finally, Fig. 5d shows the finished ASP 31 after withdrawal, ready for use in the imaging mode.

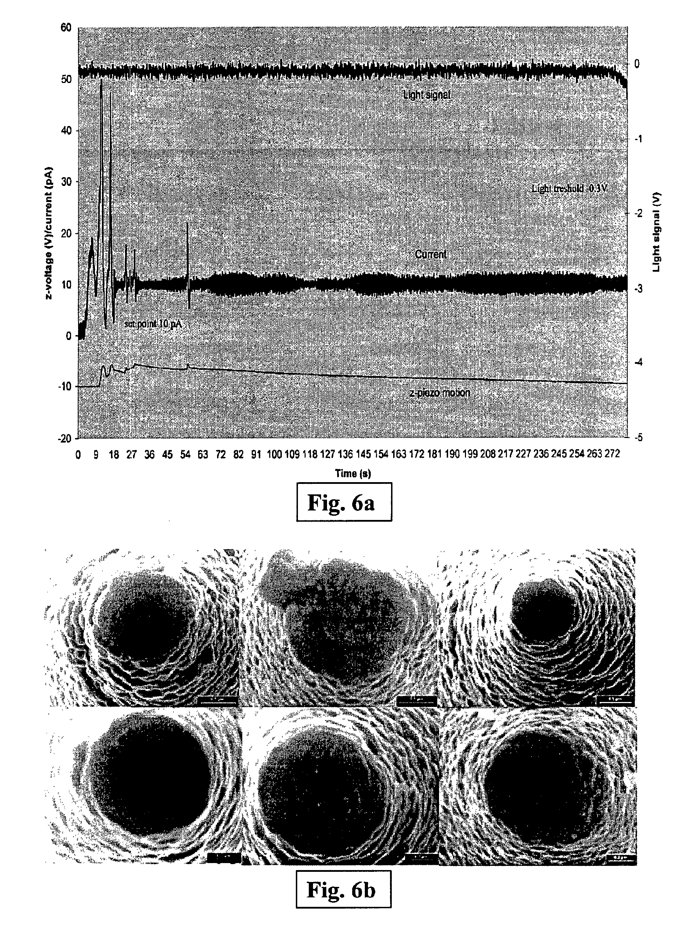

Fig. 6a shows a record of measured values, the electrolytic current $I_1$, the voltage $V_1$ applied to the preamplifier of the probe positioner 34, and the intensity $\Phi$ of the transmitted light 39 (uppermost curve) during the process of aperture formation. The beginning of the record shows the last few seconds before contact is made. ASP 31 is lowered towards the surface of electrolyte 47 by means of long-range mechanical positioner 33. Current and light intensity are zero. Voltage $V_1$ is at its maximum negative value, $V_1$ = - 10 V, corresponding to fully expanded probe positioner 34, under control of the CCE units 4 and 5 (Fig. 2). Then, at time t ≈ 10 s, contact is made, indicated by an abrupt onset of current flow and reduced negative voltage $V_1$, corresponding to a contraction of positioner 34. Voltage reduction and contraction are the response of CCE units 4 and 5 which try to adjust the position of ASP 31 for constant current flow $I_1$ = 10 pA. This value is achieved after a transient time of about 30 s. The rest of the record shows very good control of $I_1$ which remains constant except for noise. Voltage $V_1$ however is getting more and more negative, corresponding to increasing expansion of positioner 34. The expansion compensates the removal of metal from the apex of ASP 31. About 265 s after start, Φ begins to deviate from zero, indicating the onset of transmission of light through the aperture. At time t = 280 s, Φ has reached the predetermined final value of intensity which triggers retraction of the ASP. Here, the record is automatically terminated.

Fig. 6b shows end-on views of a series of ASPs after aperture formation according to the invention. The scanning electron microscope (SEM) images show the flat end faces with a dark spot at the center. This spot is the aperture 13. It appears dark because the secondary electron emission rate from the glass core 11 is lower than that from the metal coating 12. The coating consists of grains, i.e. individual crystallites, with dimensions in the 50 nm range. These grains cause the rough outer surface of the coating on the side walls but have no influence on aperture formation. The different sizes of the apertures were predetermined by varying the threshold value for the intensity of the transmitted light 39.

Figs. 7a to 7f show schematically the repair of a damaged ASP.

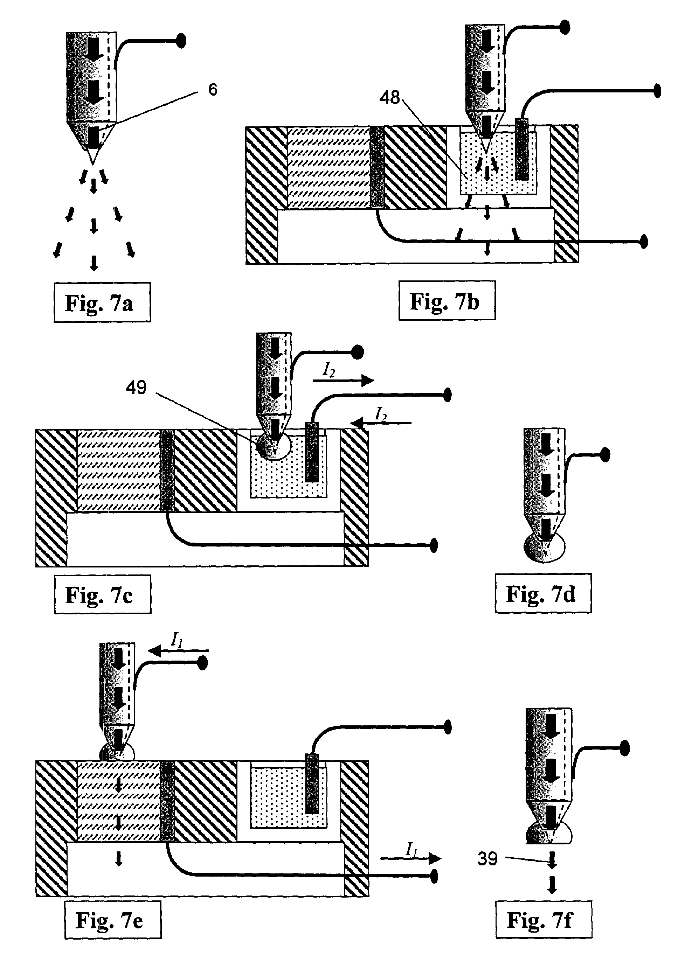

Fig. 7a shows the damaged tip. Some metal is broken off the rim of the apex, leaving an opening too big for high resolution imaging. The latter is indicated by the strong and expanding exiting light beam. Fig. 7b shows the ASP immersed in liquid electrolyte 48. As indicated in Fig. 7c, current $I_2$ drives isotropic electrolytic deposition of silver at the tip's apex until the aperture is closed. This is indicated by the disappearance of the exiting light beam. It is assumed in this example that the contact area cannot be controlled with the precision required for aperture formation. This is because the liquid electrolyte tends to creep along the ASP and also because the contact of the ASP with the liquid electrolyte cannot be broken as easily as with the solid one. The amount of deposited material hence will be too large in general. However, the size of this deposit 49 is shown grossly exaggerated in Figs. 7c to 7f for the sake of clarity. Fig. 7e shows the ASP after re-formation of an aperture with the process according to the present inevntion as described before. The ASP is now ready to resume operation in the imaging mode, as indicated in Fig. 7f by the weak, but focused exiting beam 39.

While the present invention has been described by way of a few examples, these shall not limit the scope of protection since it is obvious to someone skilled in the art that the invention can be easily adapted to match any requirements in the field of tip or probe manufacturing, shaping, or repair - here called "conditioning" - for any type of scanning probe microscopes or other applications where similar tips are being used.

**Claims**

1. A conditioning apparatus for a scanning probe (31) or similar device having a nanometer-scale tip of a material or opening (13) in a material (12),
   **characterized by**

   - means (41) for housing at least one medium reacting with said material,
   - means (34) for holding and/or positioning said probe (31), such that it can be brought in contact with said reactive medium, and
   - means (3, 4, 5, 37) for governing said conditioning by monitoring and/or controlling said contact.

2. The conditioning apparatus according to claim 1,
   **characterized in that**

   - the means (34) for holding/positioning the scanning probe (31) enables translating/shifting, rotating, and/or tilting the latter such that different parts of said scanning probe (31) may contact the reactive medium.

3. The conditioning apparatus according to claim 1 or 2,
   **characterized in that**

   - the means (41) for media housing includes a reactive material-depositing medium (48) and a reactive material-removing medium (47) and
   - the means (34) for holding/positioning the probe enables placing said probe in contact with each of said media.

4. The conditioning apparatus according to any of the preceding claims,
   **characterized in that**

   - the reactive material-depositing medium (47) is a liquid medium and
   - the reactive material-removing medium is a solid medium (48), both being preferably electrolytes.

5. The conditioning apparatus according to claim 4,
   **characterized in that**

- the media are electrolytes,
- an electrolytic cell is formed by the scanning probe (31) as a first electrode (7), the respective electrolyte (47 or 48), and a second electrode (51 or 52),
- material is deposited or removed, resp., from said probe (31) by driving an electric current through said electrolytic cell,
- said current being preferably stabilized at a predetermined value by the means (4) for governing the conditioning.

6. The conditioning apparatus according to any of the preceding claims, adapted preferably to the conditioning of aperture scanning probes including the controlled deposition of a small particle of material onto a transparent medium,
   **characterized in that**

   - the means (3, 4, 5, 37) for governing the conditioning includes a light detector (37) and controls the deposition/removal by monitoring the light sent through and exiting said probe (31) or said medium.

7. A conditioning apparatus, combining the functional parts of a scanning probe microscope and the conditioning apparatus according to any of the preceding claims,
   **characterized in that** it includes

   - a first zone (44) for imaging a sample (46), preferably by scanning the probe (31) relative to said sample (46),
   - a second zone (45) for conditioning said probe,
   - means for positioning said probe (31) relative to said two zones (44 and 45) and/or for positioning said two zones (44 and 45) relative to said probe (31), and
   - means for operating said microscope alternatively in an imaging mode or a conditioning mode.

8. A method for conditioning, i.e. fabricating, reshaping or repairing, a scanning probe (31) or similar device having a sharp tip of a material or opening (13) in a material (12),
   **characterized in that**

   - material is deposited on or removed from or modified in at least one selected area of said probe (31) preferably by chemical reaction with one or more reactive media,
   - the deposition and/or removal is monitored, and
   - the deposition and/or removal process controlled in relation to said monitoring, in particular stopped when preselected conditions are achieved.

9. The method according to claim 8,
   **characterized in that**

   - chemical reaction with one or more reactive media is used,
   - progress of the reaction is monitored by at least one parameter characteristic for said progress,
   - said parameter's value is used as input to govern the conditioning by controlling the position of the probe with respect to said reactive media.

10. The method according to claim 8 or 9,
    **characterized in that**

    - chemical reaction with at least one electrolyte as reactive medium is used,
    - electrodes are attached to said electrolyte and the probe, thus forming an electrolytic cell,
    - material is deposited on or removed from said probe by driving an electric current through said electrolytic cell, and
    - said current is stabilized at a predetermined value to control the conditioning.

11. The method according to claim 9 or 10,
    **characterized in that**

    - one of the reactive media a solid material, preferably $AgPO_3$-AgI glass or an alkalihydroxyde or iodine.

12. The method according to any of the claims 8 to 11 for fabricating the aperture of an aperture scanning probe having a transparent core and an opaque coating,
    **characterized in that**

    - an opening is generated in said coating,
    - the intensity of radiation, especially light, transmitted through said opening in said probe is chosen as the characteristic parameter, and
    - the coating removal process is stopped when a predetermined value of said radiation intensity is reached.

13. The method according to any of the claims 8 to 11 for reshaping or repairing the aperture of an aperture scanning probe having a transparent core and an opaque coating,
    **characterized in that**

    - said opaque coating is deposited at the apex of said probe by reacting with at least a first reactive medium until the diameter of said aperture is reduced to a first predetermined value, and
    - conditionally, said aperture is opened up again to a second predetermined value by a second chemical reaction with said first or another reactive medium.

Fig. 1a

Fig. 1b

Fig. 2

**Fig. 3**

**Fig. 4**

**Fig. 5a**

**Fig. 5b**

**Fig. 5c**

**Fig. 5d**

**Fig. 6a**

**Fig. 6b**

Fig. 7a

Fig. 7b

Fig. 7c

Fig. 7d

Fig. 7e

Fig. 7f

EP 1 146 376 A1

| | European Patent Office | EUROPEAN SEARCH REPORT | Application Number EP 00 81 0319 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | MULIN D ET AL: "USE OF SOLID ELECTROLYTIC EROSION FOR GENERATING NANO-APERTURE NEAR-FIELD COLLECTORS" APPLIED PHYSICS LETTERS,US,AMERICAN INSTITUTE OF PHYSICS. NEW YORK, vol. 71, no. 4, 28 July 1997 (1997-07-28), pages 437-439, XP000698243 ISSN: 0003-6951 | 1,6,8-12 | G02B21/00 |
| Y | | 13 | |
| A | * the whole document * | 3-5,7 | |
| X | VIKRAM C S ET AL: "CHEMICAL SILVER COATING OF FIBER TIPS IN NEAR-FIELD SCANNING OPTICAL MICROSCOPY" OPTICS LETTERS,US,OPTICAL SOCIETY OF AMERICA, WASHINGTON, vol. 24, no. 10, 15 May 1999 (1999-05-15), pages 682-684, XP000846964 ISSN: 0146-9592 | 8 | |
| Y | | 13 | TECHNICAL FIELDS SEARCHED (Int.Cl.7) |
| A | * page 682, right-hand column, last paragraph - page 683, right-hand column, last paragraph * | 1,3,4 | G02B G01N G01B |
| X | "IN SITU SHARPENING OF ATOMIC FORCE MICROSCOPE TIPS" IBM TECHNICAL DISCLOSURE BULLETIN,US,IBM CORP. NEW YORK, vol. 38, no. 2, 1 February 1995 (1995-02-01), page 637 XP000502713 ISSN: 0018-8689 * the whole document * | 1,2,7-9 | |
| | -/-- | | |

The present search report has been drawn up for all claims

| Place of search | Date of completion of the search | Examiner |
|---|---|---|
| BERLIN | 21 September 2000 | Ciarrocca, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

18

**European Patent Office**

**EUROPEAN SEARCH REPORT**

Application Number

EP 00 81 0319

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 1995, no. 11, 26 December 1995 (1995-12-26) & JP 07 198314 A (JEOL LTD), 1 August 1995 (1995-08-01) * abstract * | 1,2,7-9 | |
| X | PATENT ABSTRACTS OF JAPAN vol. 018, no. 430 (C-1236), 11 August 1994 (1994-08-11) & JP 06 128800 A (NIKON CORP), 10 May 1994 (1994-05-10) * abstract * | 1,8,9 | |
| X | US 5 038 034 A (FUJITA SHIGETO) 6 August 1991 (1991-08-06) * column 2, line 40 - column 3, line 5 * | 1,7,8 | |
| X | US 5 548 117 A (NAKAGAWA TOHRU) 20 August 1996 (1996-08-20) * column 3, line 21 - line 40 * * column 5, line 56 - column 6, line 12 * * figures 1,2 * | 1,3,8 | TECHNICAL FIELDS SEARCHED (Int.Cl.7) |
| X | US 5 838 005 A (LAI JIE ET AL) 17 November 1998 (1998-11-17) * page 8, line 10 - line 61; figure 8A * | 1,3,8,13 | |
| X | PATENT ABSTRACTS OF JAPAN vol. 1999, no. 14, 22 December 1999 (1999-12-22) & JP 11 248720 A (SEIKO INSTRUMENTS INC), 17 September 1999 (1999-09-17) * abstract * | 1,3,8,9 | |
| X | US 5 686 207 A (SUDA MASAYUKI ET AL) 11 November 1997 (1997-11-11) * column 2, line 36 - column 3, line 3 * | 1,3 | |

-/--

The present search report has been drawn up for all claims

| Place of search | Date of completion of the search | Examiner |
|---|---|---|
| BERLIN | 21 September 2000 | Ciarrocca, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

**European Patent Office**

## EUROPEAN SEARCH REPORT

Application Number

EP 00 81 0319

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99 08099 A (DEUTSCHE TELEKOM AG ;KOOPS HANS WILFRIED PETER (DE); BRUECKL HUBER) 18 February 1999 (1999-02-18) * page 11, line 13 - page 12, line 27; figure 6 * | 1,3,7,8 | |
| X | EP 0 763 742 A (KANAGAWA KAGAKU GIJUTSU AKAD) 19 March 1997 (1997-03-19) * column 57, line 40 - column 59, line 17; figures 53C,93-97 * | 8,13 | |

TECHNICAL FIELDS SEARCHED (Int.Cl.7)

The present search report has been drawn up for all claims

| Place of search | Date of completion of the search | Examiner |
|---|---|---|
| BERLIN | 21 September 2000 | Ciarrocca, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 00 81 0319

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2000

| Patent document cited in search report | | Publication date | Patent family member(s) | | Publication date |
|---|---|---|---|---|---|
| JP 07198314 | A | 01-08-1995 | NONE | | |
| JP 06128800 | A | 10-05-1994 | NONE | | |
| US 5038034 | A | 06-08-1991 | JP 2134503 A | | 23-05-1990 |
| | | | DE 3937722 A | | 17-05-1990 |
| US 5548117 | A | 20-08-1996 | DE 69305368 D | | 21-11-1996 |
| | | | DE 69305368 T | | 27-02-1997 |
| | | | EP 0551856 A | | 21-07-1993 |
| | | | JP 5296763 A | | 09-11-1993 |
| | | | US 5348638 A | | 20-09-1994 |
| US 5838005 | A | 17-11-1998 | US 5581083 A | | 03-12-1996 |
| JP 11248720 | A | 17-09-1999 | NONE | | |
| US 5686207 | A | 11-11-1997 | JP 2879643 B | | 05-04-1999 |
| | | | JP 8050350 A | | 20-02-1996 |
| | | | JP 2879644 B | | 05-04-1999 |
| | | | JP 8050349 A | | 20-02-1996 |
| | | | DE 19529170 A | | 15-02-1996 |
| WO 9908099 | A | 18-02-1999 | EP 1002228 A | | 24-05-2000 |
| EP 0763742 | A | 19-03-1997 | AU 2575495 A | | 21-12-1995 |
| | | | US 5812724 A | | 22-09-1998 |
| | | | WO 9533207 A | | 07-12-1995 |
| | | | US 5908562 A | | 01-06-1999 |

EPO FORM P0459

For more details about this annex : see Official Journal of the European Patent Office, No. 12/82